# EUROPÄISCHE PATENTSCHRIFT

(11) **EP 2 503 656 B1**
(45) Veröffentlichungstag und Bekanntmachung des Hinweises auf die Patenterteilung: **11.02.2015**
(21) Anmeldenummer: 12156127.8
(22) Anmeldetag: 20.02.2012
(51) Int. Cl.: H02B 1/38

(54) **Elektrischer Schaltschrank insbesondere für eine Mittelspannungsschaltanlage**
Electrical switching cabinet, in particular for a medium voltage switching assembly
Armoire électrique, notamment pour une installation moyenne tension

(30) Priorität: 21.03.2011 DE 102011005875
(43) Veröffentlichungstag der Anmeldung: 26.09.2012
(73) Patentinhaber: Schneider Electric Sachsenwerk GmbH, 93055 Regensburg (DE)
(72) Erfinder: Zimmerer, Rudolf, 93192 Wald (DE); Osterrieter, Manuel, 81375 München (DE)
(74) Vertreter: DREISS Patentanwälte PartG mbB

(56) Entgegenhaltungen:
- EP-A1- 0 708 511
- US-A- 5 905 244
- US-A1- 2002 101 141

## Beschreibung

Die Erfindung betrifft einen elektrischen Schaltschrank insbesondere für eine Mittelspannungsschaltanlage.

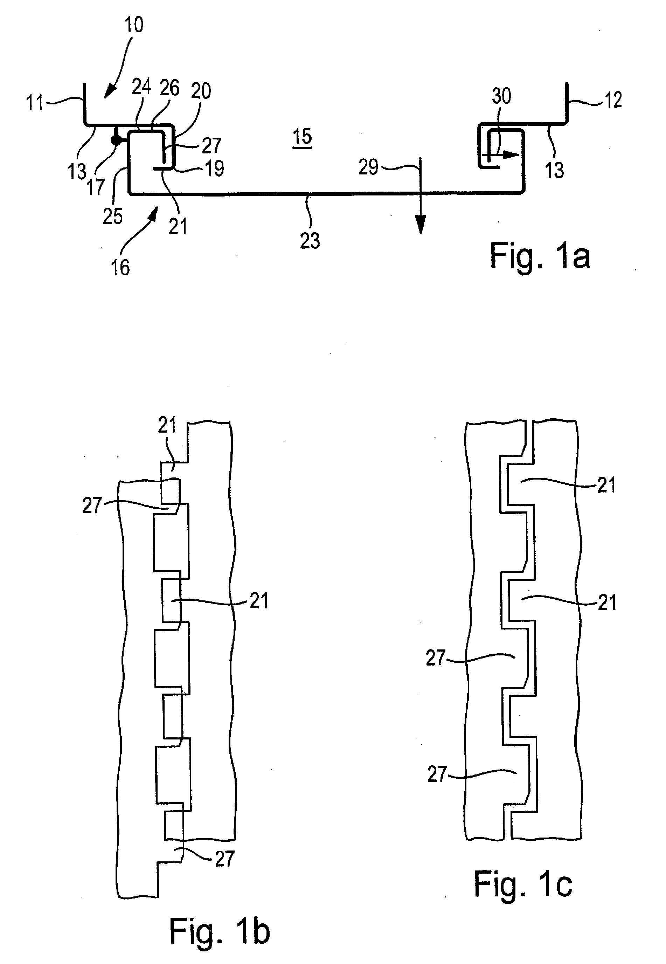

Figur 1a zeigt eine schematische Schnittdarstellung eines Ausschnitts aus einem Gehäuse eines aus der EP 708 511 A1 bekannten Schaltschranks aus einer vertikalen Richtung von oben.

In der Figur 1a ist ein Gehäuse 10 eines elektrischen Schaltschranks ausschnittsweise dargestellt. Das Gehäuse 10 weist eine etwa vertikale linke Seitenwand 11 und eine etwa vertikale rechte Seitenwand 12 sowie eine etwa rechtwinklig dazu angeordnete, vertikale Vorderwand 13 auf. In der Vorderwand 13 ist eine im Wesentlichen rechteckförmige Öffnung 15 enthalten, die durch eine Blende 16 verschlossen ist. Die Blende 16 ist über ein etwa vertikal ausgerichtetes Scharnier 17 gelenkig mit der Vorderwand 13 verbunden. Mit Hilfe des Scharniers 17 kann die Blende 16 zwischen der dargestellten, geschlossenen Stellung und einer geöffneten Stellung hin- und her bewegt werden.

An den beiden vertikalen, zur Öffnung 15 gerichteten Rändern der Vorderwand 13 ist jeweils ein etwa vertikaler, L-förmiger Vorderwand-Schenkel 19 angeordnet, der aus zwei Stegen 20, 21 besteht. Der erste Steg 20 ist dabei etwa rechtwinklig mit der Vorderwand 13 verbunden und in Richtung zu der Blende 16 ausgerichtet. Der zweite Steg 21 ist etwa parallel zu der Vorderwand 13 ausgerichtet. Das freie Ende des zweiten Stegs 21 zeigt in eine Richtung, die von der Öffnung 15 weggerichtet ist.

Der zweite Steg 21 des Vorderwand-Schenkels 19 weist in seiner etwa vertikal ausgerichteten Längsrichtung eine Abfolge von Vorsprüngen und Ausnehmungen auf. Die Vorsprünge und Ausnehmungen sind dabei jeweils etwa rechtwinklig ausgebildet. Die das freie Ende des Vorderwand-Schenkels 19 bildende Kante hat damit einen etwa mäanderförmigen Verlauf.

Die Blende 16 weist eine Frontplatte 23 auf, die etwa parallel zu der Vorderwand 13 ausgerichtet ist. An den beiden vertikalen Rändern der Frontplatte 23 ist jeweils ein etwa vertikaler, U-förmiger Frontplatten-Schenkel 24 angeordnet, der aus drei Stegen 25, 26, 27 besteht. Der erste Steg 25 ist dabei etwa rechtwinklig mit der Frontplatte 23 verbunden und in Richtung zu der vorderwand 13 ausgerichtet. Der zweite Steg 26 ist etwa parallel zu der Frontplatte 23 ausgerichtet. Der zweite Steg 26 zeigt dabei in eine Richtung, die zu der Öffnung 15 gerichtet ist. Der dritte Steg 27 ist etwa rechtwinklig zu der Frontplatte 23 ausgerichtet und das freie Ende des dritten Stegs 27 zeigt in eine Richtung, die von der Vorderwand 13 weggerichtet ist.

Der dritte Steg 27 des Frontplatten-Schenkels 24 weist in seiner etwa vertikal ausgerichteten Längsrichtung eine Abfolge von Ausnehmungen und Vorsprüngen auf. Die Ausnehmungen und Vorsprünge sind dabei jeweils etwa rechtwinklig ausgebildet. Die das freie Ende des Frontplatten-Schenkels 24 bildende Kante hat damit einen etwa mäanderförmigen Verlauf.

In der geschlossenen Stellung der Blende 16 gemäß Figur 1a ist der zweite Steg 26 des Frontplatten-Schenkels 24 etwa parallel und benachbart zu der Vorderwand 13 des Gehäuses 10 angeordnet. Weiterhin ist der dritte Steg 27 des Frontplatten-Schenkels 24 etwa parallel und benachbart zu dem ersten Steg 20 des Vorderwand-Schenkels 19 angeordnet.

In der geschlossenen Stellung kann die Blende 16 eine verriegelte Stellung einnehmen. In der verriegelten Stellung der Blende 16 sind die Vorsprünge und Ausnehmungen des zweiten Stegs 21 des Vorderwand-Schenkels 19 und die Ausnehmungen und Vorsprünge des dritten Stegs 27 des Frontplatten-Schenkels 24 derart zueinander ausgerichtet, dass die Vorsprünge des dritten Stegs 27 des Frontplatten-Schenkels 24, in Öffnungsrichtung der Blende 16 gesehen, sich "hinter" den Vorsprüngen des zweiten Stegs 21 des Vorderwand-Schenkels 19 befinden. Die Blende 16 kann damit nicht geöffnet werden. Die verriegelte Stellung der Blende 16 ist in der Figur 1b gezeigt.

Weiterhin kann die Blende 16 in der geschlossenen Stellung eine entriegelte Stellung einnehmen. In der entriegelten Stellung der Blende 16 sind die Vorsprünge und Ausnehmungen des zweiten Stegs 21 des Vorderwand-Schenkels 19 und die Ausnehmungen und Vorsprünge des dritten Stegs 27 des Frontplatten-Schenkels 24 derart zueinander ausgerichtet, dass die Vorsprünge des dritten Stegs 27 des Frontplatten-Schenkels 24, in Öffnungsrichtung der Blende 16 gesehen, sich nicht "hinter" den Vorsprüngen des zweiten Stegs 21 befinden, sondern in dem Bereich der Ausnehmungen des zweiten Stegs 21 des Vorderwand-Schenkels 19. Weiterhin sind die Ausnehmungen des zweiten Stegs 21 des Vorderwand-Schenkels 19 hinsichtlich ihrer Form und ihrer Abmessungen derart ausgebildet, dass der dritte Steg 27 des Frontplatten-Schenkels 24 durch den zweiten Steg 21 hindurchtreten kann. Die Blende 16 kann damit geöffnet werden. Die entriegelte Stellung der Blende 16 ist in der Figur 1c gezeigt.

Ausgehend von ihrer verriegelten Stellung kann die Blende 16 in etwa vertikaler Richtung nach oben in die entriegelte Stellung angehoben werden. In der angehobenen, entriegelten Stellung kann die Blende 16 von der geschlossenen Stellung um das Scharnier 17 nach außen geschwenkt und damit in die geöffnete Stellung bewegt werden.

Im Hinblick auf weitere Merkmale des Schaltschranks der Figur 1a sowie insbesondere im Hinblick auf die Funktionsweise für das Öffnen und Schließen der Blende 16 des Schaltschranks wird ausdrücklich auf die Erläuterungen in der eingangs bereits genannten EP 708 511 A1 verwiesen.

Wie erläutert wurde, befindet sich der dritte Steg 27 des Frontplatten-Schenkels 24 in der geschlossenen Stellung der Blende 16, in Öffnungsrichtung der Blende 16 gesehen, "hinter" dem zweiten Steg 21 des Vorderwand-Schenkels 19, so dass die Blende 16 nicht geöffnet werden kann.

Bei einer Fehlfunktion innerhalb des Schaltschranks, beispielsweise beim Auftreten eines elektrischen Lichtbogens, entsteht ein sehr hoher Druck innerhalb des Gehäuses 10 des Schaltschranks. Dies führt dazu, dass eine Kraft auf die Frontplatte 23 der geschlossenen Blende 16 einwirkt, wie sie in der Figur 1a mit Hilfe des Pfeils 29 dargestellt ist. Die durch diese Kraft gegebenenfalls entstehende Ausbauchung der Frontplatte 23 kann bei ungünstigen Bedingungen zur Folge haben, dass der dritte Steg 27 des Frontplatten-Schenkels 24 sich in eine Richtung bewegt, die von der Öffnung 15 weggerichtet ist. Diese Bewegung ist in der Figur 1a mit Hilfe des Pfeils 30 dargestellt. Die genannte Bewegung kann dazu führen, dass der dritte Steg 27 des Frontplatten-Schenkels 24 so weit zur Seite verschoben wird, dass er sich, in Öffnungsrichtung der Blende 16 gesehen, nicht mehr "hinter" dem zweiten Steg 21 des Vorderwand-Schenkels 19 befindet. Dies bedeutet aber, dass die Blende 16 in diesem Fall aufgehen würde.

Aufgabe der Erfindung ist es, einen elektrischen Schaltschrank zu schaffen, dessen Blende im Falle einer Fehlfunktion auch bei ungünstigen Bedingungen sicher verschlossen bleibt.

Die Erfindung löst diese Aufgabe durch einen elektrischen Schaltschrank nach dem Anspruch 1.

Der erfindungsgemäße Schaltschrank ist mit einem Gehäuse versehen, das eine Vorderwand aufweist, in der eine Öffnung enthalten ist. Weiterhin ist der erfindungsgemäße Schaltschrank mit einer Blende versehen, mit der in einer verriegelten Stellung die Öffnung verschließbar ist. Die Vorderwand ist mit einem Vorderwand-Schenkel versehen, der einen Steg mit mindestens einem Vorsprung aufweist. Die Blende ist mit einem Frontplatten-Schenkel versehen, der einen Steg mit mindestens einem Vorsprung aufweist. Einer der beiden Vorsprünge weist eine einen Einschnitt bildende Nase auf. In der verriegelten Stellung der Blende greift der andere Vorsprung in den Einschnitt ein.

Aufgrund des Ineinandergreifens des Vorsprungs und des Einschnitts kann sich die Blende auch unter ungünstigen Bedingungen eines Fehlerfalls nicht öffnen. Ein Schutz insbesondere von Bedienpersonen im Umfeld des Schaltschranks ist damit gewährleistet.

Besonders vorteilhaft ist es, wenn der Vorsprung des Stegs des Vorderwand-Schenkel die den Einschnitt bildende Nase aufweist, und wenn in der verriegelten Stellung der Blende der Vorsprung des Stegs des Frontplatten-Schenkels in den Einschnitt eingreift.

Aufgrund der Nase ist der Steg des Frontplatten-Schenkels in seiner örtlichen Lage festgelegt. Der Steg kann sich insbesondere nicht in Richtung zu der Nase bzw. über die Nase hinweg bewegen. Damit ist es nicht möglich, dass der Steg des Frontplatten-Schenkels sich beispielsweise bei einem Fehlerfall so weit in Richtung von der Öffnung des Gehäuses wegbewegt, dass er sich nicht mehr "hinter" dem Steg des Vorderwand-Schenkels befindet. Mit Hilfe der Erfindung wird also sicher verhindert, dass sich die Blende bei einem Fehlerfall öffnet.

Bei einer Weiterbildung der Erfindung weist der Vorsprung des Stegs des Frontplatten-Schenkels einen Einschnitt auf, wobei in der verriegelten Stellung der Blende der Vorsprung des Stegs des Vorderwand-Schenkels in den Einschnitt eingreift. Auf diese Weise wird die lokale Fixierung des Frontplatten-Schenkels "hinter" dem Vorderwand-Schenkel weiter verbessert. Ein Öffnen der Blende im Fehlerfall wird auf diese Weise sicher verhindert.

Weitere Merkmale, Anwendungsmöglichkeiten und Vorteile der Erfindung ergeben sich aus der nachfolgenden Beschreibung von Ausführungsbeispielen der Erfindung, die in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

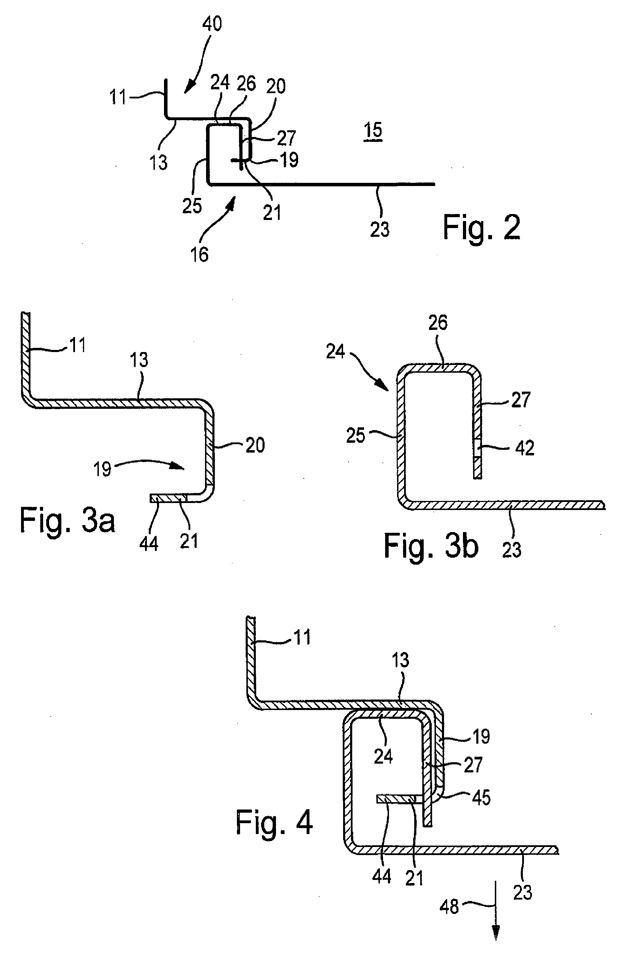

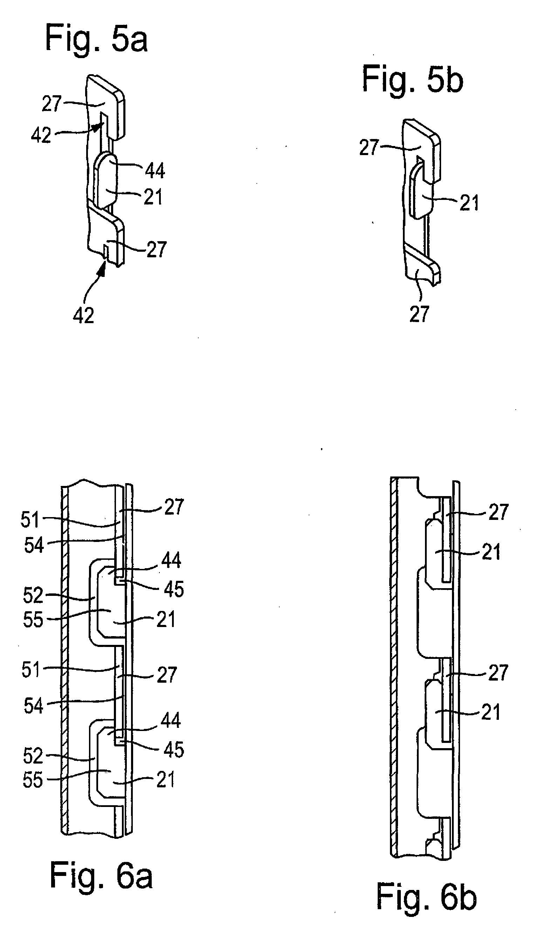

Figur 2 zeigt eine schematische Schnittdarstellung eines Ausschnitts aus einem Gehäuse eines erfindungsgemäßen Schaltschranks mit einer Blende aus einer vertikalen Richtung von oben, Figuren 3a, 3b zeigen schematische Schnittdarstellungen eines Vorderwand-Schenkels des Gehäuses und eines Frontplatten-Schenkels der Blende aus einer vertikalen Richtung von oben, Figur 4 zeigt die beiden Schenkel in der geschlossenen Stellung der Blende aus einer vertikalen Richtung von oben, Figuren 5a, 5b zeigen schematische Perspektivdarstellungen der beiden Schenkel in der entriegelten und der verriegelten Stellung der Blende, und Figuren 6a, 6b zeigen schematische Draufsichten auf die beiden Schenkel in der entriegelten und der verriegelten Stellung der Blende.

In der Figur 2 ist ein Ausführungsbeispiel eines Gehäuses 40 eines Schaltschranks gezeigt, das im Hinblick auf eine Mehrzahl von Merkmalen mit dem Gehäuse 10 der Figur 1a übereinstimmt. In der Figur 2 sind deshalb auch für übereinstimmende Merkmale dieselben Bezugszeichen verwendet wie in der Figur 1a. Im Hinblick auf die Beschreibung der übereinstimmenden Merkmale der Figur 2 wird insoweit auf die vorstehende Beschreibung der Figur 1a verwiesen.

Ein Unterschied zwischen dem Gehäuse 40 der Figur 2 und dem Gehäuse 10 der Figur 1a besteht darin, dass bei dem Gehäuse 40 der Figur 2 die Blende 16 nicht schwenkbar ausgebildet ist. Das Scharnier 17 des Gehäuses 10 der Figur 1a ist bei dem Gehäuse 40 der Figur 2 nicht vorhanden. Stattdessen ist die Blende 16 des Gehäuses 40 der Figur 2 nur manuell aus dem Gehäuse 40 herausnehmbar. Insoweit handelt es sich bei der Blende 16 des Gehäuses 40 der Figur 2 um keine schwenkbare Blende, sondern um eine abnehmbare Blende.

Zum Herausnehmen der Blende 16 aus dem Gehäuse 40 der Figur 2 muss die Blende 16 zuerst von einer Bedienperson aus der verriegelten Stellung in die entriegelte Stellung angehoben werden, um danach von der Bedienperson von der geschlossenen Stellung aus dem Gehäuse 40 herausgenommen werden zu können.

Ein weiterer Unterschied zwischen dem Gehäuse 40 der Figur 2 und dem Gehäuse 10 der Figur 1a besteht darin, dass der Vorderwand-Schenkel 19 und der Frontplatten-Schenkel 24 bei dem Gehäuse 40 der Figur 2 andersartig ausgebildet sind als bei dem Gehäuse 10 der Figur 1a. Nachfolgend werden der Vorderwand-Schenkel 19 und der Frontplatten-Schenkel 24 des Gehäuses 40 der Figur 2 anhand der Figuren 2, 3a, 3b, 4, 5a, 5b, 6a, 6b näher erläutert.

Im Unterschied zu der Figur 1a ist der dritte Steg 27 des Frontplatten-Schenkels 24 des Gehäuses 40 in seiner von der Vorderwand 13 wegweisenden Richtung etwas länger ausgebildet und weist weiterhin einen Einschnitt 42 auf. Die längere Ausbildung des dritten Stegs 27 ergibt sich insbesondere aus einem Vergleich der Figuren 1a und 2. Der Einschnitt 42 ergibt sich insbesondere aus der Figur 3b oder aus der Figur 5a.

Der Einschnitt 42 des dritten Stegs 27 des Frontplatten-Schenkels 24 des Gehäuses 40 ist an jedem der Vorsprünge des dritten Stegs 27 vorhanden und ist dort jeweils etwa geradlinig und vertikal nach unten ausgerichtet und offen. Jeder der Einschnitte 42 weist eine Breite auf, die zumindest der Materialdicke des zweiten Stegs 21 des Vorderwand-Schenkels 19 entspricht. Jeder der Vorsprünge des zweiten Stegs 21 ist in seiner von der Öffnung 15 wegweisenden Richtung zumindest so lang, dass er in den jeweils zugehörigen Einschnitt 42 des dritten Stegs 27 eingreifen kann.

Das Zusammenspiel des Einschnitts 42 eines Vorsprungs des dritten Stegs 27 des Frontplatten-Schenkels 24 und eines Vorsprungs des zweiten Stegs 21 des Vorderwand-Schenkels 19 ergibt sich insbesondere aus den Figuren 5a, 5b, wobei in der entriegelten Stellung der Figur 5a aufgrund des angehobenen Zustands der Blende 16 der zweite Steg 21 nicht in den Einschnitt 42 des dritten Stegs 27 eingreift, während in der verriegelten Stellung der Figur 5b der zweite Steg 21 in den Einschnitt 42 des dritten Stegs 27 von unten eintaucht.

Weiterhin weist der Vorsprung des zweiten Stegs 21 des Vorderwand-Schenkels 19 eine Nase 44 auf, die etwa geradlinig und vertikal nach oben ausgerichtet ist. Aufgrund bzw. hinter der Nase 44 entsteht ein Einschnitt 45, der ebenfalls etwa geradlinig und vertikal nach oben ausgerichtet und offen ist, und der eine Breite aufweist, die zumindest der Materialdicke des dritten Stegs 27 des Frontplatten-Schenkels 24 entspricht. Die Nase 44 und der Einschnitt 45 sind insbesondere aus den Figuren 4, 5a, 6a zu entnehmen.

Wie sich insbesondere aus der Figur 4 ergibt, befindet sich der Vorsprung des dritten Stegs 27 des Frontplatten-Schenkels 24 in der geschlossenen Stellung der Blende 16 im Bereich des von der Nase 44 des Vorsprungs des zweiten Stegs 21 des Vorderwand-Schenkels 19 gebildeten Einschnitts 45. Dies bedeutet, dass der Vorsprung des dritten Stegs 27 in der verriegelten Stellung der Blende 16 in den Einschnitt 45 eingreift.

Gemäß der Figur 4 ist der Vorsprung des dritten Stegs 27 des Frontplatten-Schenkels 24 in der verriegelten Stellung der Blende 16, in Richtung zu der Öffnung 15 gesehen, "hinter" der Nase 44 des Vorsprungs des zweiten Stegs 21 des Vorderwand-Schenkels 19 angeordnet. In der verriegelten Stellung der Blende 16 kann der dritte Steg 27 aufgrund der Nase 44 somit nicht in Richtung zu der Nase 44 bzw. über die Nase 44 hinaus wegbewegt werden.

Dieses Zusammenspiel des dritten Stegs 27 des Frontplatten-Schenkels 24 und des Einschnitts 45 ergibt sich insbesondere aus der Figur 4 sowie aus den Figuren 6a, 6b.

Weiterhin ergibt sich insbesondere aus den Figuren 5a, 5b, dass der Einschnitt 42 des dritten Stegs 27 des Frontplatten-Schenkels 24 und der durch die Nase 44 des zweiten Stegs 21 des Vorderwand-Schenkels 10 entstehende Einschnitt 45 im Wesentlichen derart zueinander ausgebildet sind, dass die beiden Einschnitte 42, 45 in der verriegelten Stellung der Blende 16 ineinander eingreifen.

In der Figur 4 ist die geschlossene Stellung der Blende 16 dargestellt. Aus der geschlossenen sowie entriegelten Stellung kann die Blende 16 in ihre geöffnete Stellung überführt werden. Dies ist in der Figur 4 durch einen Pfeil 48 angedeutet.

In der geschlossenen und abgesenkten, verriegelten Stellung der Blende 16 taucht der Vorsprung des dritten Stegs 27 des Frontplatten-Schenkels 24 in den durch die Nase 44 gebildeten Einschnitt 45 ein. Die Nase 44 steht dabei, wie erläutert wurde, von dem Vorsprung des zweiten Stegs 21 des Vorderwand-Schenkels 19 nach oben ab. Wie ebenfalls bereits erläutert wurde, kann der dritte Steg 27 des Frontplatten-Schenkels 24 damit nicht mehr in einer Richtung nach außen und damit weg von der Öffnung 15 bewegt werden. Dies ist gleichbedeutend damit, dass der dritte Steg 27 aufgrund der Nase 44 nicht in die durch den Pfeil 30 in der Figur 1a gekennzeichnete Richtung bewegt werden kann.

In den Figuren 5a, 5b und in den Figuren 6a, 6b sind jeweils die angehobene, entriegelte Stellung und die verriegelte Stellung der Blende 16 dargestellt. Die Figuren 6a, 6b stellen dabei eine Draufsicht auf den zweiten Steg 21 des Vorderwand-Schenkels 19 dar, so dass der dritte Steg 27 des Frontplatten-Schenkels 24 nur als Draufsicht auf dessen Kante erkennbar ist.

In der angehobenen, entriegelten Stellung der Figuren 5a, 6a greifen der dritte Steg 27 des Frontplatten-Schenkels 24 und der zweite Steg 21 des Vorderwand-Schenkels 21 nicht ineinander ein. Damit kann die Blende 16 geöffnet werden. In der verriegelten Stellung der Figuren 5b, 6b greift der Steg 21 in den Einschnitt 42 und der Steg 27 in den Einschnitt 45 ein. Die Blende 16 kann damit nicht geöffnet werden.

Wie im Zusammenhang mit der Figur 1a erläutert wurde, weist der zweite Steg 21 des Vorderwand-Schenkels 19 und der dritte Steg 27 des Frontplatten-Schenkels 24 eine Abfolge von Ausnehmungen und Vorsprüngen auf. Diese Ausnehmungen und Vorsprünge sind in den Figuren 5a, 5b, 6a, 6b erkennbar. Beispielhaft sind in der Figur 6a zwei Vorsprünge 51 und zwei Ausnehmungen 52 des dritten Stegs 27 sowie zwei Ausnehmungen 54 und zwei Vorsprünge 55 des zweiten Stegs 21 kenntlich gemacht. In der angehobenen, entriegelten Stellung der Figur 6a sind die Vorsprünge 51 im Bereich der Ausnehmungen 54 und die Vorsprünge 52 im Bereich der Ausnehmungen 55 angeordnet. Die Form und die Abmessungen der Vorsprünge 51, 55 sind dabei derart an die Ausnehmungen 52, 54 angepasst, dass die Vorsprünge 51, 55 in der entriegelten Stellung der Blende 16 durch die Ausnehmungen 52, 54 hindurchtreten können. Die abstehende Nase 44 des zweiten Stegs 21 des Vorderwand-Schenkels 19 tritt dabei durch den Einschnitt 42 in dem dritten Steg 27 des Frontplatten-Schenkels 24 hindurch.

In nicht-dargestellter Weise ist/sind im Bereich der Vorderwand 13 und der Blende 16 eine oder mehrere Vorrichtung/en vorgesehen, mit der/denen ein unbeabsichtigtes oder unerwünschtes Anheben der Blende 16 aus der verriegelten und damit nicht-angehobenen, sondern abgesenkten Stellung verhindert wird. Beispielsweise ist es möglich, dass Bolzen und/oder Nieten oder dergleichen vorgesehen sind, die in der verriegelten, abgesenkten Stellung der Blende 16 eine mechanische Verbindung der Blende 16 und der Vorderwand 13 bewirken.

## Patentansprüche

1. Elektrischer Schaltschrank, insbesondere für eine Mittelspannungsschaltanlage, mit einem Gehäuse (40), das eine Vorderwand (13) aufweist, in der eine Öffnung (15) enthalten ist, sowie mit einer Blende (16), mit der in einer verriegelten Stellung die Öffnung (15) verschließbar ist, wobei die Vorderwand (13) mit einem Vorderwand-Schenkel (19) versehen ist, der einen Steg (21) mit mindestens einem Vorsprung aufweist, und wobei die Blende (16) mit einem Frontplatten-Schenkel (24) versehen ist, der einen Steg (27) mit mindestens einem Vorsprung aufweist, **dadurch gekennzeichnet, dass** einer der beiden Vorsprünge eine einen Einschnitt (45) bildende Nase (44) aufweist, und dass in der verriegelten Stellung der Blende (16) der andere Vorsprung in den Einschnitt (45) eingreift.

2. Schaltschrank nach Anspruch 1, wobei der Vorsprung (55) des Stegs (21) des Vorderwand-Schenkels (19) die den Einschnitt (45) bildende Nase (44) aufweist, und dass in der verriegelten Stellung der Blende (16) der Vorsprung (51) des Stegs (27) des Frontplatten-Schenkels (24) in den Einschnitt (45) eingreift.

3. Schaltschrank nach Anspruch 2, wobei der Vorsprung (51) des Stegs (27) des Frontplatten-Schenkels (24) einen Einschnitt (42) aufweist, und wobei in der verriegelten Stellung der Blende (16) der Vorsprung (55) des Stegs (21) des Vorderwand-Schenkels (19) in den Einschnitt (42) eingreift.

4. Schaltschrank nach einem der Ansprüche 1 bis 3, wobei die Nase (44) von dem Vorsprung nach oben absteht, so dass der Einschnitt (45) nach oben offen ist.

5. Schaltschrank nach einem der Ansprüche 1 bis 4, wobei der Einschnitt (42) in dem Frontplatten-Schenkel (24) nach unten offen ist.

6. Schaltschrank nach einem der Ansprüche 1 bis 5, wobei der/die Einschnitt/e (45, 42) etwa geradlinig ausgebildet ist/sind.

7. Schaltschrank nach einem der Ansprüche 1 bis 6, wobei der/die Einschnitt/e (45, 42) etwa vertikal ausgerichtet ist/sind.

8. Schaltschrank nach einem der Ansprüche 1 bis 7, wobei der/die Einschnitt/e (45, 42) eine Breite aufweist/aufweisen, die zumindest der Materialdicke des eingreifenden Vorsprungs entspricht.

9. Schaltschrank nach einem der Ansprüche 1 bis 8, wobei die Nase (44) des Vorsprungs (55) des Stegs (21) des Vorderwand-Schenkels (19) in einer entriegelten Stellung der Blende (16) durch den Einschnitt (42) in dem Vorsprung (51) des Stegs (27) des Frontplatten-Schenkels (24) hindurchtreten kann.

## Claims

1. Electrical switchgear cabinet in particular for medium-voltage switchgear, having a main body (40) which has a front wall (13) containing an opening (15), and having a blanking member (16) by which, in a locked position, the opening (15) can be closed off, the front wall (13) being provided with a front-wall portion (19) which has a segment (21) having at least one projection, and the blanking member (16) being provided with a front-panel portion (24) which has a segment (27) having at least one projection, **characterised in that** one of the two projections has a nose (44) which creates a recess (45), and **in that**, when the blanking member (16) is in the locked position, the other projection engages in the recess (45).

2. Switchgear cabinet according to claim 1, wherein the projection (55) from the segment (21) of the front-wall portion (19) has the nose (44) which creates the recess (45), and in that, when the blanking member (16) is in the locked position, the projection (51) from the segment (27) of the front-panel portion (24) engages in the recess (45).

3. Switchgear cabinet according to claim 2, wherein the projection (51) from the segment (27) of the front-panel portion (24) has a recess (42) and wherein, when the blanking member (16) is in the locked position, the projection (55) from the segment (21) of the front-wall portion (19) engages in the recess (42).

4. Switchgear cabinet according to one of claims 1 to 3, wherein the nose (44) projects upwards from the projection and the recess (45) is thus open in the upward direction.

5. Switchgear cabinet according to one of claims 1 to 4, wherein the recess (42) in the front-panel portion (24) is open in the downward direction.

6. Switchgear cabinet according to one of claims 1 to 5, wherein the recess(es) (45, 42) is/are of form extending approximately in a straight line.

7. Switchgear cabinet according to one of claims 1 to 6, wherein the recess(es) (45, 42) is/are approximately vertically aligned.

8. Switchgear cabinet according to one of claims 1 to 7, wherein the width of the recess(es) (45, 42) corresponds to at least the thickness of the material of the projection which engages.

9. Switchgear cabinet according to one of claims 1 to 8, wherein, when the blanking member (16) is in an unlocked position, the nose (44) on the projection (55) from the segment (21) of the front-wall portion (19) is able to pass through the recess (42) in the projection (51 from the segment (27) of the front-panel portion (24).

## Revendications

1. Armoire de commande électrique, en particulier pour une installation de distribution moyenne tension, comprenant un boîtier (40) qui présente une paroi avant (13) dans laquelle est prévue une ouverture (15), et comprenant un obturateur (16) grâce auquel l'ouverture (15) peut être fermée en position verrouillée, la paroi avant (13) étant munie d'une branche de paroi avant (19) qui présente une traverse (21) avec au moins une partie en saillie, et l'obturateur (16) étant muni d'une branche de plaque frontale (24) qui comprend une traverse (27) avec au moins une partie en saillie, **caractérisée en ce que** l'une des deux saillies présente un nez formant une entaille (45) et **en ce que**, en position verrouillée de l'obturateur (16), l'autre saillie vient s'engager dans l'entaille (45).

2. Armoire de commande selon la revendication 1, **caractérisée en ce que** la saillie (55) de la traverse (21) de la branche de paroi avant (19) présente le nez (44) formant l'entaille (45) et **en ce que**, en position verrouillée de l'obturateur (16), la saillie (51) de la traverse (27) de la branche de plaque frontale (24) vient s'engager dans l'entaille (45).

3. Armoire de commande selon la revendication 2, **caractérisée en ce que** la saillie (51) de la traverse (27) de la branche de plaque frontale (24) présente une entaille (42) et **en ce que**, en position verrouillée de l'obturateur (16), la saillie (55) de la traverse (21) de la branche de paroi avant (19) vient s'engager dans l'entaille (42).

4. Armoire de commande selon l'une des revendications 1 à 3, **caractérisée en ce que** le nez (44) part depuis la saillie vers le haut de façon à ce que l'entaille (45) soit ouverte vers le haut.

5. Armoire de commande selon l'une des revendications 1 à 4, dans laquelle l'entaille (42) dans la branche de plaque frontale (24) est ouverte vers le bas.

6. Armoire de commande selon l'une des revendications 1 à 5, dans laquelle l'entaille/les entailles (45, 42) est/sont réalisée(s) approximativement linéaire(s).

7. Armoire de commande selon l'une des revendications 1 à 6, dans laquelle l'entaille/les entailles (45, 42) est/sont orientée(s) approximativement verticalement.

8. Armoire de commande selon l'une des revendications 1 à 7, dans laquelle l'entaille/les entailles (45, 42) présente(nt) une largeur qui correspond au moins à l'épaisseur de matériau de la saillie engagée.

9. Armoire de commande selon l'une des revendications 1 à 8, dans laquelle le nez (44) de la saillie (55) de la traverse (21) de la branche de paroi avant (19), en position déverrouillée de l'obturateur (16) peut passer à travers l'entaille (42) dans la saillie (51) de la traverse (27) de la branche de plaque frontale (24).
